# FASCICULE DE BREVET EUROPEEN

(11) **EP 2 887 162 B1**
(45) Date de publication et mention de la délivrance du brevet: **04.08.2021**
(21) Numéro de dépôt: 14199475.6
(22) Date de dépôt: 19.12.2014
(51) Int. Cl.: G04G 17/08, G09G 5/32

(54) **Dispositif de restitution de notifications, et son procédé de pilotage**
Vorrichtung zur Wiedergabe von Meldungen, und ihr Überwachungsverfahren
Notification rendering device, and method for controlling same

(30) Priorité: 23.12.2013 FR 1363480
(43) Date de publication de la demande: 24.06.2015
(73) Titulaire: ORANGE, 92130 Issy-les-Moulineaux (FR)
(72) Inventeur: MIT, Frédéric, 75018 Paris (FR); NUNEZ BALCELLS, Xavier, 75015 Paris (FR); FAUCHOUX, Fabrice, 22700 Louannec (FR)

(56) Documents cités:
- EP-A1- 2 639 786
- WO-A1-96/21888
- US-A1- 2008 291 225
- US-A1- 2012 182 677
- US-A1- 2013 044 215
- None

## Description

### Arrière-plan de l'invention

L'invention se rapporte au domaine général des objets dits «objets connectés » ou « objets intelligents ».

Elle concerne plus particulièrement un dispositif à écran ployable destiné à être agencé en forme de boucle pour être porté par l'utilisateur et adapté pour restituer des notifications reçues de manière sans fil depuis un appareil électronique externe, ainsi qu'un procédé de pilotage du dispositif.

Les propositions « d'objets connectés » se multiplient, c'est-à-dire des objets dotés d'une fonctionnalité permettant la communication sans fil de l'objet avec un appareil électronique externe (que ce dernier soit le routeur d'un réseau de communication, un appareil électronique particulier associé à cet objet connecté, ou un autre appareil électronique externe). Dans la suite on utilisera indifféremment les expressions « objet intelligent », « objet connecté », et « bracelet connecté » en notant que la désignation «connecté» indique la capacité de l'objet d'entrer en contact avec un appareil externe de manière sans fil plutôt que l'état momentané (connecté ou déconnecté) de l'objet.

Il existe, notamment, diverses propositions de bracelet connecté, notamment des objets pour collectionner des données associées aux activités sportives de l'utilisateur et pour en afficher un certain nombre sur le bracelet (tandis que d'autres données sont transmises pour analyse par une application hébergée par le téléphone intelligent (ordiphone, smartphone) de l'utilisateur). Toutefois, en général les bracelets connectés de ce genre sont conçus pour l'émission de données vers l'appareil externe associé et ne possèdent pas la capacité d'alerter l'utilisateur des notifications reçues au niveau de l'appareil associé. Dans la suite, sauf quand le contexte exige le contraire, on utilisera l'expression « bracelet » pour désigner tout objet susceptible d'être agencé en forme de boucle pour être porté par un utilisateur que ce soit autour du poignet ou autour d'un autre élément du corps ou de l'habillement de l'utilisateur.

Il existe aussi plusieurs propositions commerciales et théoriques de montre connectée (aussi appelée «montre intelligente »), ces dernières étant pourvues de moyens de communication sans fil permettant une connexion avec un téléphone intelligent associé ou une tablette associée et disposant d'un nombre de fonctions basées sur l'interactivité avec l'appareil externe associé. Certaines des montres intelligentes proposées consistent en un écran tactile qui ressemble à une tablette de très petite échelle et qui vient remplacer la partie « cadran » de la montre, conservant une sangle de type classique. Pourtant, compte tenu des dimensions faibles d'un cadran de montre, la lisibilité des éléments affichés sur un tel écran de montre intelligente est moindre, surtout lorsqu'on cherche à alerter l'utilisateur des notifications reçues de l'appareil associé.

Parmi les bracelets et montres connectés proposés, certains sont agencés pour afficher des images, des interfaces utilisateurs graphiques (GUI) et autres sur la sangle et un sous- ensemble des dispositifs prévoit la modification de l'image affichée en fonction de l'orientation ou le degré de flexion ou de courbure du bracelet. Toutefois, les propositions présentées jusqu'ici se servent, pour déterminer l'orientation ou le degré de flexion du bracelet, de capteurs dont la complexité et/ou bien l'encombrement est non négligeable.

Le document EP 2 639 786 prévoit un dispositif à écran ployable selon lequel, lorsque des moyens de détection constatent que la sangle est en état courbé, la position d'affichage des éléments graphiques qui sont affichées sur la sangle est commandée en fonction de l'orientation (en rotation) de la sangle et ceci dans le but d'assurer que les éléments graphiques soient affichées en face des yeux de l'utilisateur. Le document US 2008/291225 décrit un dispositif similaire.

Compte tenu du faible espace disponible, à l'intérieur d'un bracelet connecté, pour disposer les composants de celui-ci, et de la tendance à pourvoir les bracelets intelligents d'un nombre croissant de modules fonctionnels (GPS, microphone, caméra, et autres) il existe un besoin de prévoir des moyens techniques qui permettent d'alerter l'utilisateur des notifications qui lui sont destinées d'une manière qui assure la lisibilité des informations affichées sans se servir de moyens techniques dont la complexité et l'encombrement seraient gênants.

### Objet et résumé de l'invention

L'invention permet notamment d'améliorer la situation exposée ci-dessus en proposant un dispositif à écran tel que défini dans la revendication indépendante 1 annexée .

Grâce à certains modes de réalisation de l'invention un dispositif connecté peut assurer la restitution des notifications, reçues depuis un appareil externe, selon un mode de restitution qui dépend de l'état de connexion des éléments de connexion qui assurent le maintien du dispositif en forme de boucle. De ce fait, un premier mode de restitution d'une notification peut être employé lorsque les éléments de connexion sont connectés l'un à l'autre, ce qui sera le cas, par exemple, lorsque le dispositif est porté autour du poignet de l'utilisateur, et un deuxième mode de restitution peut être employé lorsque les éléments de connexion sont déconnectés l'un de l'autre, ce qui sera le cas, par exemple, lorsque le dispositif est enlevé du poignet de l'utilisateur.

L'emploi de deux modes de restitution différents permet d'optimiser la façon de restituer une notification par rapports aux différentes propriétés de l'écran ployable selon l'état porté ou enlevé de ce dernier, permettant de maximiser la lisibilité des informations. Puisque le mode de restitution des notifications est conditionné par l'état connecté ou déconnecté des éléments de connexion qui sont pourvus pour assurer le maintien en forme de boucle du dispositif, l'adaptation du mode de restitution peut être assurée en se servant de moyens techniques simples de faible encombrement.

Il convient de noter que l'expression «'écran ployable » vise tout écran capable de se courber - que ce soit de manière continue (par exemple lorsqu'il s'agit d'un écran souple) ou de manière discontinue (par exemple lorsqu'il s'agit d'un écran à morceaux articulaire) - et, donc, l'expression «en forme de boucle» désigne aussi bien les formes dont le périmètre est défini par des morceaux à ligne droite que ceux dont le périmètre est défini par une courbe lisse (ainsi que des formes intermédiaires).

Certains modes de réalisation sont définis aux revendications dépendantes 2 et 3. Comme l'unité de commande est adaptée pour commander le premier mode de restitution des notifications lorsque les premier et deuxième éléments de connexion sont connectés l'un à l'autre, c'est-à-dire à un moment quand il est fort probable que l'écran ployable est porté autour d'un membre de l'utilisateur (ou, à tout le moins, il est agencé en forme de boucle tout comme le substrat qui le porte), ces manières de mise en oeuvre du premier mode de restitution assurent l'avertissement de l'utilisateur d'une notification qui lui est destinée par des moyens qui prennent en compte le faible espace d'affichage visible depuis un point de vue fixe lorsque le substrat porteur de l'écran est agencé en forme de boucle et, de ce fait, l'écran est substantiellement courbe.

Selon un certain mode de réalisation de l'invention le deuxième mode de restitution des notifications reçues comporte l'affichage, le long d'au moins une partie de l'écran, du contenu d'un message signalé par la notification reçue. Comme l'unité de commande est adaptée pour commander le deuxième mode de restitution des notifications lorsque les premier et deuxième éléments de connexion sont séparés l'un de l'autre, c'est-à-dire à un moment quand il est fort probable que l'écran est disposé selon un agencement plat (ou à tout le moins il est moins courbé que lorsque le substrat est maintenu en forme de boucle), cette manière de mise en œuvre du deuxième mode de restitution permet de présenter à l'utilisateur le contenu de la notification qui lui est destiné par des moyens qui prennent en compte l'espace visible accru lorsque le substrat porteur de l'écran n'est pas maintenu en forme de boucle.

L'invention propose aussi certains exemples de mise en œuvre du dernier mode de réalisation, selon lesquels le deuxième mode de restitution des notifications comporte l'affichage, en plus du contenu du message, d'un jeu de raccourcis de réponse à la notification reçue. De tels raccourcis de réponse permettent à l'utilisateur de répondre de manière simple aux messages qui lui sont communiqués par des notifications. Dans le cas d'un dispositif connecté qui est associé à un téléphone intelligent, tablette ou autre qui lui transmet les notifications, ces exemples de mise en œuvre de l'invention permettent à l'utilisateur de répondre à ces messages sans devoir sortir le téléphone intelligent, tablette ou autre qui est associé à son dispositif connecté.

Selon certains modes de réalisation des exemples ci-dessus, le dispositif de restitution de notifications comporte une unité d'analyse de la notification reçue, cette unité d'analyse étant destinée à sélectionner, en fonction du résultat de l'analyse, le jeu de raccourcis de réponse à afficher lors du fonctionnement en deuxième mode de restitution de notifications. Dans certains cas l'analyse se fait par repérage de mots-clés dans un message signalé par la notification reçue. En cas de repérage d'un mot-clé déterminé, un jeu de raccourcis de réponse associé audit mot-clé peut être sélectionné pour affichage en relation avec le message affiché. La détermination des raccourcis de réponse en fonction d'une analyse du message reçu permet à l'utilisateur de transmettre des réponses simplifiées qui sont néanmoins bien adaptées au contenu sémantique du message reçu.

Dans certains modes de réalisation du dispositif à écran ployable mentionnés ci-dessus, l'unité de commande est adaptée pour détecter - après la restitution d'une notification reçue, selon l'un des premier et deuxième modes de restitution - un changement de l'état de connexion des premier et deuxième éléments de connexion et pour répondre à la détection de changement d'état de connexion en changeant le mode de restitution de la notification à l'autre des premier et deuxième modes de restitution. De cette manière la façon de restituer la notification reçue est adaptée de manière dynamique pour l'optimiser en fonction de la forme de l'écran.

Selon certains modes de réalisation de l'invention le dispositif à écran ployable ci-dessus est réalisé en forme de bracelet.

La présente invention propose en outre un procédé pour piloter un dispositif à écran ce procédé étant défini dans la revendication indépendante 10 annexée.

### Brève description des dessins

D'autres caractéristiques et avantages de la présente invention ressortiront de la description faite ci-dessous, en références aux dessins annexés qui en illustrent des exemples de réalisation dépourvus de tout caractère limitatif. Sur les figures :
- la figure 1 représente de manière schématique un exemple d'un dispositif à écran souple servant à la restitution de notifications, conforme à un mode de réalisation de l'invention, dans laquelle :
   ∘ la figure 1A est une représentation du dispositif de cet exemple, selon un agencement « à plat » de l'écran souple lorsqu'aucune notification n'a été reçue, et
   ∘ la figure 1B montre le dispositif de la figure 1A agencé en forme de boucle autour du poignet d'un utilisateur;
- la figure 2 représente de manière schématique l'exemple du dispositif de la figure 1, dans laquelle :
   ∘ la figure 2A est une représentation du dispositif de cet exemple, selon un agencement « à plat » de l'écran souple, lors de la restitution d'une notification selon un deuxième mode de restitution, et
   ∘ la figure 2B représente le dispositif de la figure 2A lors de la restitution d'une notification selon un premier mode de restitution (quand le dispositif est agencé en forme de boucle autour du poignet d'un utilisateur); et

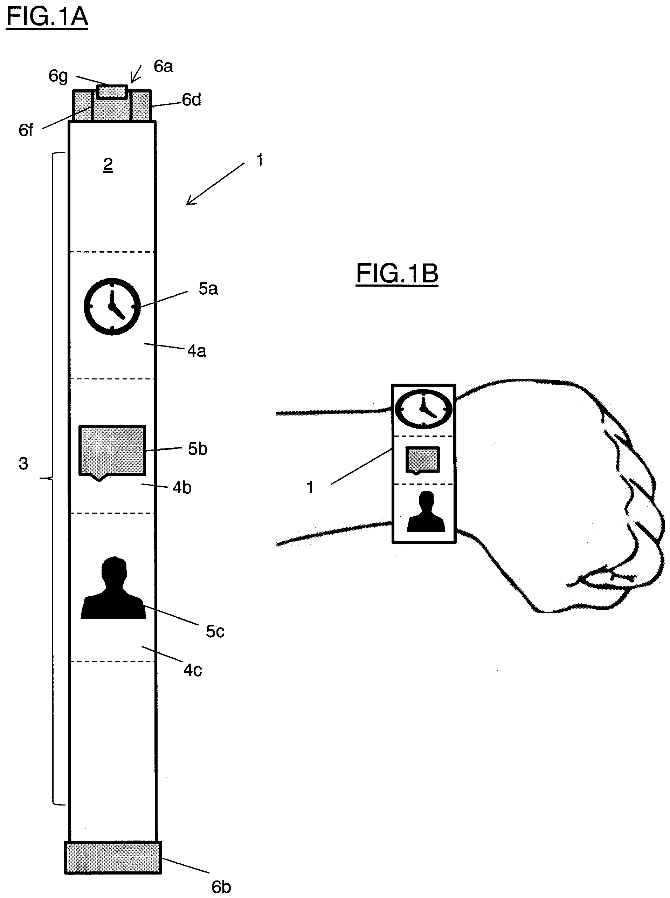

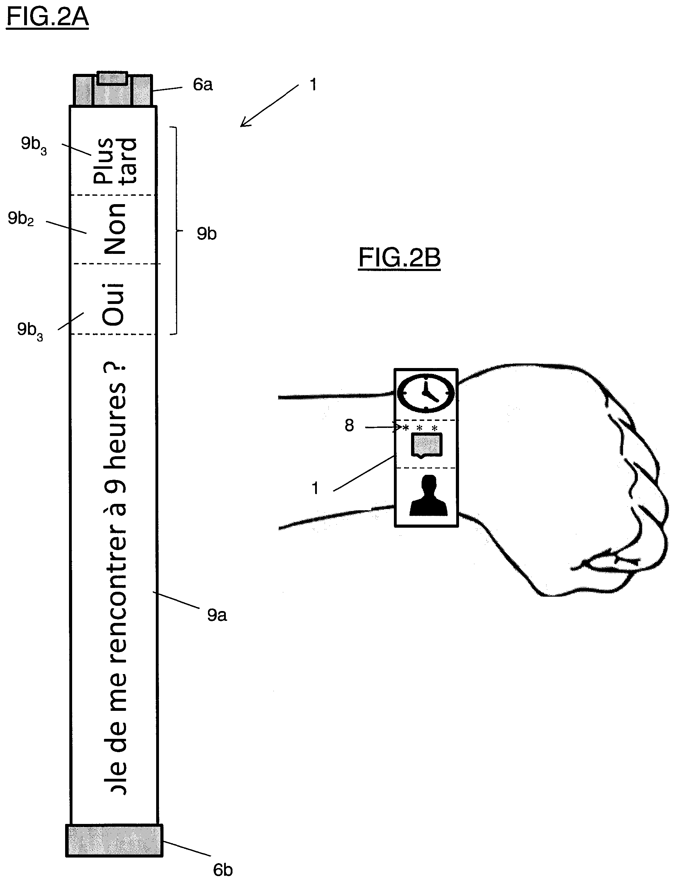

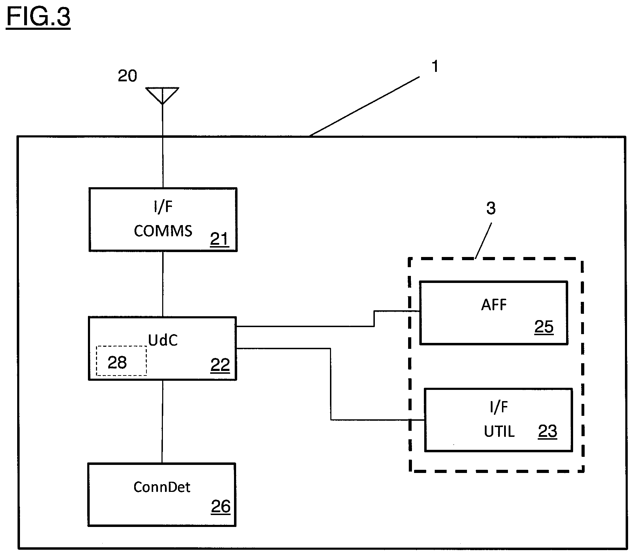

- la figure 3 est un schéma fonctionnel représentant un exemple des modules fonctionnels du dispositif du mode de réalisation des figures 1 et 2.

### Description détaillée de l'invention

L'invention sera maintenant décrite en se référant à certains modes de réalisation, notamment dans le cadre d'un exemple de sa mise en œuvre dans un dispositif en forme de bracelet intelligent.

Selon l'exemple de la figure 1, un bracelet intelligent 1 conforme à un mode de réalisation de l'invention comporte une sangle 2 dont au moins une partie correspond à un écran souple tactile 3 sur lequel diverses informations peuvent être affichées. La sangle 2 correspond à un substrat porteur de l'écran souple 3 et, selon la mise en œuvre particulière choisie, l'écran 3 s'étend sur un pourcentage plus au moins important de la longueur du substrat. Selon le présent exemple l'écran 3 est adapté pour réaliser un affichage digital simple (par points) mais l'invention n'est pas particulièrement limitée par rapport au style graphique employé pour l'affichage. L'utilisateur peut se servir de l'écran tactile 3 en tant que module pour l'entrée de ses instructions, de ses choix et d'autres informations. Une unité de commande 22 (montrée à la figure 3 et qui sera décrite plus en détails ci-dessous) commande l'affichage au niveau de l'écran souple 3 des informations voulues (images, textes, icônes, symboles et autres).

L'invention n'est pas particulièrement limitée par rapport aux composants physiques qui servent à la mise en œuvre de la sangle 2 et de l'écran 3 du bracelet 1. De manière typique, les modules fonctionnels qui réalisent les diverses fonctions du bracelet 1 sont intégrés à l'intérieur de la sangle 2. Ces modules fonctionnels seront décrits plus en détails ci-dessous en relation avec la figure 3.

Selon l'exemple représenté sur les figures 1 et 2, l'unité de commande 22 commande l'affichage sur l'écran 3 d'une représentation graphique comportant trois zones d'affichage 4a, 4b et 4c - dédiées, respectivement, à des fonctions d'horloge, de messagerie et d'accès à une rubrique se rapportant à certaines personnes (par exemple les membres du foyer de l'utilisateur du bracelet, les membres d'une communauté particulier, des favoris, et autres) - dans lesquels on affiche des icônes 5a, 5b et 5c qui évoquent les fonctions correspondantes. Bien entendu l'unité de commande 22 peut être conçu de manière à varier les icônes qui sont affichés à un moment donné, en fonction de différents critères déterminés. Les lignes en pointillés 4x montrées à la figure 1 indiquent les frontières entre les différentes zones d'affichage 4a, 4b et 4c. Il convient de noter que ces lignes 4x ne sont pas nécessairement affichées sur l'écran 3 et que l'unité de commande 22 peut commander l'affichage sur l'écran 3 d'une manière souple et dynamique, en d'autres termes selon ses besoins l'unité de commande 22 peut soit diviser l'étendue de l'écran souple 3 en différentes zones d'affichage (de dimensions variables) soit traiter l'écran en tant que région d'affichage unitaire.

Selon l'exemple représenté sur les figures 1 et 2, lors de l'allumage du bracelet 1 une représentation graphique de base est affichée sur l'écran 3 que le bracelet 1 soit posé à plat comme il est représenté à la figure 1A ou fermé autour du poignet de l'utilisateur tel qu'il est représenté à la figure 1B. Cette représentation de base peut être toujours la même ou bien elle peut varier (par exemple pour correspondre aux éléments qui était affichés au moment de l'extinction du bracelet).

Un premier élément de connexion 6a et un deuxième élément de connexion 6b servent à assurer le maintien du bracelet 1 en forme de boucle. L'invention n'est pas particulièrement limitée quant à la forme des éléments de connexion tant que ces derniers servent à maintenir le bracelet en forme de boucle lorsqu'ils sont connectés l'un à l'autre et permettent l'ouverture de la boucle lorsqu'ils sont détachés l'un de l'autre.

Selon l'exemple de la figure 1A, les premier et deuxième éléments de connexion 6a et 6b possèdent des formes complémentaires. Conformément à cet exemple, l'élément 6b définit un évidement (non représenté) dimensionné pour recevoir dans son intérieur l'élément 6a. L'élément 6a comporte une partie en forme de plaque 6d et une partie en forme de ressort à lame 6f. La partie formant ressort à lame 6f est reliée à l'une de ses extrémités à la plaque 6d et à l'autre de ses extrémités à une dent 6g. Pour introduire le premier élément de connexion 6d dans l'évidement du deuxième élément de connexion 6b, l'utilisateur serre l'élément 6a entre ses doigts de façon à ramener la partie 6f formant ressort à lame contre la plaque 6d. Il glisse ensuite le premier élément de connexion 6a dans l'évidement de l'élément de connexion 6b et relâche la pression sur la partie 6f formant ressort à lame. De par son élasticité, quand elle est relâchée la partie 6f formant ressort à lame pousse la dent 6g contre la paroi de l'évidement du deuxième élément de connexion 6b, ce qui sert à retenir la plaque 6d à l'intérieur de l'évidement du second élément de connexion 6b (surtout lorsqu'un creux complémentaire est prévu dans la paroi de l'évidement). Pour sortir le premier élément de connexion 6d de l'évidement du deuxième élément de connexion 6b, l'utilisateur serre à nouveau l'élément 6a entre ses doigts de façon à ramener la partie 6f formant ressort à lame contre la plaque 6d et à détacher la dent 6g de la paroi de l'évidement. L'utilisateur peut ensuite glisser le premier élément de connexion 6a hors de l'évidement du deuxième élément de connexion 6b.

Parmi les fonctions assurées par le bracelet 1 de cet exemple il y a une fonction de restitution à l'utilisateur des notifications reçues de manière sans fil depuis un appareil électronique externe au bracelet 1. Bien entendu le bracelet 1 peut assurer d'autres fonctions aussi, selon la volonté du concepteur. La présente invention n'est pas particulièrement limitée par rapport à la technologie de communication employée par le bracelet 1 pour recevoir les notifications - selon les souhaits du concepteur le bracelet 1 comporte des moyens de réception sans fil de type Bluetooth™; communication en champ proche (NFC), réseau local sans fil (WLAN) selon la norme 802.11n, et/ou autres. Par ailleurs, selon certaines applications le bracelet 1 comporte un module de transmission et de réception pour assurer la communication bidirectionnelle avec l'appareil électronique externe.

Typiquement le bracelet 1 est utilisé dans des applications qui impliquent la réception de notifications émises par d'autres dispositifs du même utilisateur, par exemple des notifications émises par son téléphone intelligent, sa tablette, son ordinateur de bureau, et autres. Pourtant, l'invention n'est pas limitée à ce cas de figure: le bracelet 1 peut être employé dans des applications selon lesquelles il reçoit des notifications en provenance du routeur d'un réseau sans fil ou de tout autre appareil électronique doté d'une fonction de communication sans fil compatible avec la sienne/les siennes. Selon l'application le bracelet 1 peut servir pour avertir l'utilisateur des SMS et mails qui lui sont destinés, des messages Facebook et des messages sur Twitter de ces contacts, et autres.

Selon ce mode de réalisation de l'invention, le bracelet 1 dispose de deux modes de restitution des notifications reçues et le mode de restitution qui est mis en œuvre à un moment donné dépend de l'état connectés/détachés des premier et deuxième éléments de connexion 6a,6b.

Si une notification est reçue au moment où le bracelet 1 est maintenu en état fermé autour du poignet de l'utilisateur, les éléments de connexion 6a, 6b sont connectés l'un à l'autre et, donc, un premier mode de restitution de la notification est employé. La figure 2B en donne un exemple.

Comme il est représenté sur la figure 2B, selon cet exemple le premier mode de restitution de la notification comporte l'affichage, dans la zone d'affichage 4b affectée à la messagerie, d'une représentation symbolique 8 en forme d'au moins une étoile, cette représentation symbolique 8 servant d'indicateur de la réception d'une notification. Dans cet exemple le nombre d'étoiles faisant partie de la représentation symbolique 8 de réception de notification varie en fonction de la priorité accordée à la notification reçue. L'unité de commande 22 peut décider en fonction de différents critères la priorité à affecter à la notification reçue et, donc, commander l'affichage du nombre correspondant d'étoiles. Par exemple, une priorité élevée peut être accordée en fonction d'un expéditeur associé à la notification (par exemple la personne qui a envoyé un mail objet de la notification, la personne qui a posté un message sur Twitter dont la notification comporte le texte, et autres), en fonction de l'urgence de la notification ou l'intensité de la demande (par exemple selon un indicateur d'urgence compris dans la notification, selon une indication du temps d'expédition du message signalé par la notification, et autres), en fonction de l'importance des données communiquées par la notification, etc. Les critères déterminant l'affectation de priorité peuvent être prédéterminés, par exemple par le fabricant du bracelet 1 qui réalise une programmation appropriée de l'unité de commande 22, mais d'autres possibilités existent. Par exemple, le bracelet 1 de cet exemple comporte une interface utilisateur (voir ci-dessous) et le bracelet 1 peut être conçu pour permettre à l'utilisateur de se servir de l'interface utilisateur afin de régler les paramètres gouvernant l'affectation de priorité.

On notera que cet exemple de mise en œuvre du premier mode de restitution des notifications, employé lorsque les éléments de connexion 6a, 6b sont connectés l'un à l'autre, fournit à l'utilisateur un avertissement de l'arrivée de la notification d'une manière qui ne demande guère d'espace sur la surface du bracelet 1. Comme on peut le voir sur la figure 2B, lorsque les éléments de connexion 6a, 6b sont connectés l'un à l'autre la partie visible du bracelet 1 est assez limitée et, donc, la restitution sous forme symbolique optimise les capacités d'affichage du bracelet 1 à ce moment-là. Il convient de noter que « la partie visible » désigne ici la surface du bracelet 1 qui est visible d'un seul coup d'oeil par une personne regardant celui-ci depuis un point de vue fixe (comme, par exemple, l'utilisateur quand il jette un coup d'œil à son poignet).

Bien que l'exemple de la figure 2B représente un premier mode de restitution de notifications qui comporte l'affichage d'une représentation symbolique indiquant l'arrivée d'une notification associée à une icône dédiée à la messagerie, l'invention n'est pas limitée à cette seule manière de mettre en œuvre le premier mode de restitution des notifications. Au lieu de l'affichage d'une représentation symbolique indiquant l'arrivée d'une notification associée à un élément graphique qui est déjà affiché sur l'écran 3, ou en plus de celui-ci, l'unité de commande 22 peut commander le premier mode de restitution des notifications de manière à comporter l'un ou plusieurs des éléments suivantes :
- l'affichage d'une icône qui ne fait pas partie de la représentation graphique de base,
- un changement de la manière de représenter une icône ou un autre élément graphique associé aux notifications (par exemple changement de couleur de l'icône 5b, augmentation de sa luminance, rendu clignotant de l'icône, et autres),
- l'affichage de caractères textuels qui signalent la réception d'une notification
- l'affichage d'une version fortement abrégée de la notification elle-même, et autres.

Par ailleurs, le premier mode de restitution des notifications peut comporter la production d'un signal d'alerte non visuel pour avertir l'utilisateur de la réception de la notification. Par exemple, le bracelet 1 peut comporter un module de vibration (non représenté) qui est piloté par l'unité de commande 22 pour vibrer en cas de réception d'une notification par le bracelet 1. De manière similaire, le bracelet 1 peut comporter un haut-parleur (non représenté) qui est piloté par l'unité de commande 22 pour émettre un son prédéterminé en cas de réception d'une notification par le bracelet 1.

En résumé, lorsque les éléments de connexion 6a, 6b sont connectés l'un à l'autre, l'unité de commande 22 organise la restitution d'une notification, reçue par le bracelet 1, conforme à un premier mode de restitution qui assure un avertissement approprié de l'utilisateur du bracelet 1 en dépit de la faible surface de l'écran ployable 3 visible de celui-ci du fait de la courbure de l'écran 3.

Si une notification est reçue au moment où les éléments de connexion 6a, 6b sont détachés l'un de l'autre, par exemple parce que le bracelet 1 est posé à plat ou tendu entre les deux mains de l'utilisateur, un deuxième mode de restitution de la notification est employé. La figure 2A en donne un exemple.

Selon l'exemple de la figure 2A, l'unité de commande 22 organise la restitution d'une notification conforme à un deuxième mode de restitution selon lequel la représentation graphique précédente est remplacée par un affichage du contenu d'un message signalé par la notification. Plus précisément, comme on peut le voir sur la figure 2A, selon cet exemple une région allongée 9a de l'écran souple 3 est utilisée dans le deuxième mode de restitution pour afficher le message véhiculé par la notification reçue. La région allongée 9a s'étend dans la direction de la longueur de l'écran souple 3 et occupe la majorité de la longueur de la sangle 2. De cette manière lorsque le bracelet n'est plus attaché en boucle on dispose, pour l'affichage du contenu du message, d'une région de taille accrue notamment par rapport à la surface visible du bracelet 1 lorsque celui-ci est attaché en boucle. Selon les souhaits du concepteur, l'unité de commande 22 peut être adaptée pour afficher le contenu du message de manière défilante, par exemple dans un cas où la longueur de la région 9a ne suffit pas pour afficher la totalité du message selon une police de taille suffisamment grande pour assurer la lisibilité du message. Selon une variante, l'unité de commande 22 est adaptée pour afficher en morceaux un message long de ce genre, et pour avancer d'un morceau à l'autre en fonction d'un évènement déclencheur (par exemple, le glissement du doigt de l'utilisateur sur l'écran tactile 3, la fin d'un intervalle temporel déterminé, ou autres).

Selon l'exemple de la figure 2A, la restitution d'une notification selon le deuxième mode de restitution prend fin quand les éléments de connexion 6a, 6b sont à nouveau connectés l'un à l'autre. Or, l'invention n'est pas particulièrement limitée quant au moment où la restitution d'une notification se termine. Par exemple, la restitution d'une notification selon le premier ou le deuxième mode de restitution peut se terminer au bout d'une période de temps déterminé (par exemple quelques secondes, une période liée à l'urgence ou l'importance du contenu, ou autre), suite à une action de l'utilisateur, etc. Selon une variante, la restitution d'une notification selon le premier mode de restitution s'arrête une fois que le contenu de la notification aura été restitué selon le deuxième mode de restitution.

Selon l'exemple de la figure 2A, le deuxième mode de restitution d'une notification reçue comporte l'affichage d'un jeu de raccourcis de réponse 9b associé au message affiché dans la région 9a de l'écran. La figure 2A représente le cas d'un jeu de raccourcis de réponse 9b comportant un premier raccourci 9b₁ qui correspond à la réponse « Oui », un deuxième raccourci 9b₂ qui correspond à la réponse « Non », et un troisième raccourci 9b₃ qui correspond à la réponse « Plus tard ». En touchant l'un de ces raccourcis de réponse l'utilisateur peut envoyer de manière simplifiée une réponse au message affiché. Par exemple, si l'utilisateur touche la partie de l'écran tactile où s'affiche le raccourci de réponse 9b₂ alors son bracelet enverra la réponse « Non » au message reçu, cette réponse étant envoyé à l'expéditeur du message notamment via le téléphone intelligent ou autre dispositif externe qui a transmis la notification au bracelet.

Bien entendu le nombre de raccourcis de réponse affichés peut aller de zéro jusqu'à un nombre arbitraire choisi, par exemple, par le concepteur du bracelet. Pourtant, si le nombre de raccourcis de réponse devient grand soit il faudrait utiliser une police de taille très petite pour représenter le message et les réponses simplifiées soit il faudrait réduire l'espace disponible pour l'affichage du message (au profit de l'espace utilisé pour afficher les raccourcis de réponse). On peut assurer la lisibilité du message et des réponses simplifiées proposées en limitant le nombre de raccourcis de réponse qui font partie du jeu 9b.

Plusieurs approches sont possibles pour décider les réponses simplifiées qui font partie du jeu de raccourcis de réponse 9b. Selon une première approche les raccourcis de réponse sont toujours les mêmes et correspondent aux réponses les plus communes (ce que l'on peut déterminer par analyse statistique). Selon une deuxième approche les raccourcis de réponse offerts à l'utilisateur sont adaptés au contenu du message affiché, notamment en fonction du résultat d'une analyse sémantique du message. Un exemple de la mise en œuvre de cette deuxième approche comporte la réalisation d'une analyse par mots-clés du message reçu, notamment une analyse des premiers mots du message. Par exemple, lorsque les premiers mots du message correspondent au texte « est-ce que... » typiquement l'unité de commande 22 choisit, en tant que jeu de raccourcis de réponse 9b, les deux réponses simplifiées « oui » et « non ».

Le bracelet 1 comporte un module (voir à la figure 3) pour détecter la connexion et le détachement des premier et deuxième éléments de connexion 6a, 6b. L'invention n'est pas particulièrement limitée par rapport à la manière de détecter l'état connecté/déconnecté des éléments de connexion.

Certains modes de réalisation de l'invention prévoient de créer un contact électrique entre conducteurs lors de la connexion des premier et deuxième éléments de contact et de rompre ce contact électrique quand les éléments de connexion se détachent. Ceci est bien le cas du bracelet de l'exemple des figures 1 et 2 lorsque les éléments de connexion 6a, 6b comportent des composants métalliques qui entrent en contact lors de l'insertion de la plaque 6d dans l'évidement du second élément de connexion 6b. Selon les modes de réalisation de ce genre, les éléments de connexion servent à créer entre eux, et à rompre, un contact qui est à la fois mécanique et électrique. La création et l'interruption de ce contact électrique correspond à une fonction d'interrupteur dont les états « fermé » et « ouvert » correspondent, respectivement, aux états « connectés » et « séparés » des premier et deuxième éléments de connexion 6a, 6b. Typiquement on intègre cet interrupteur dans un circuit de sélection du mode de restitution des notifications afin de contrôler la section du mode de restitution des notifications en fonction de l'état de connexion des éléments de connexion 6a,6b.

La présente invention n'est pas particulièrement limitée par rapport aux modules fonctionnels qui servent à assurer le fonctionnement du bracelet 1 décrit ci-dessus. La figure 3 représente de manière schématique une combinaison de modules fonctionnels utilisée selon une mise en œuvre du bracelet 1. Le bracelet comporte une antenne 20 reliée à une interface de communication 21 qui assure la fonction de communication bidirectionnelle sans fil entre le bracelet 1 et un appareil externe (par exemple un téléphone intelligent de l'utilisateur). Une unité de commande 22 pilote le fonctionnement du bracelet et est reliée à l'interface de communications 21. Typiquement l'unité de commande 22 comporte un processeur qui communique avec des mémoires ou autres modules de stockage (non représentés) ainsi qu'avec les autres modules fonctionnels, par exemple au moyen d'un bus (non représenté). Un module d'affichage 25 et une interface utilisateur 23 sont associés à l'écran 3 et sont connectés à l'unité de commande 22. Une pile ou un autre module d'alimentation (non représenté) assure l'alimentation des composants électriques du bracelet 1. Selon certains modes de réalisation de l'invention l'unité de commande 22 comporte une unité d'analyse 28 des notifications, cette dernière fournissant des résultats permettant à l'unité de commande 22 de choisir un jeu de raccourcis de réponse approprié.

Bien que des modes de réalisation particuliers de la présente invention aient été décrits ci-dessus, l'homme du métier comprendra que diverses modifications et aménagements peuvent se pratiquer dans ceux-ci sans sortir du cadre de la présente invention, telle que définie dans les revendications.

Par exemple, bien que la description ci-dessus de certains modes de réalisation du dispositif selon l'invention se rapporte à un bracelet à écran souple, d'autres types d'écran peuvent être utilisés. Par exemple, le dispositif peut employer un écran à morceaux articulaire, c'est-à-dire un écran composé de morceaux articulés les uns par rapport aux autres. Il convient de noter qu'en relation avec de tels modes de réalisation de l'invention l'expression « substantiellement courbe » se rapporte à une forme voûtée de l'écran.

## Revendications

1. Dispositif (1) à écran ployable destiné à restituer des notifications, comportant:
un substrat doté d'un écran ployable allongé (3),
un premier et un deuxième élément de connexion (6a,6b) destinés à se connecter l'un à l'autre pour maintenir le substrat en forme de boucle, l'écran (3) étant substantiellement courbe lorsque le substrat est maintenu en forme de boucle;
une unité de réception (21) destiné à recevoir, de manière sans fil, des notifications provenant d'un appareil externe, et
une unité de commande (22) adaptée pour commander la restitution des notifications reçues par l'unité de réception (21) et pour détecter l'état connecté ou séparé des premier et deuxième éléments de connexion (6a,6b),
ledit dispositif à écran ployable étant **caractérisé en ce que** l'unité de commande (22) est adaptée en outre pour commander, en fonction de l'état détecté de connexion des premier et deuxième éléments de connexion (6a,6b), la restitution d'une notification reçue, selon soit un premier mode de restitution soit un deuxième mode de restitution dans lequel la représentation affichée pour représenter la notification est différente de celle du premier mode de restitution.

2. Dispositif (1) à écran ployable selon la revendication 1, **caractérisé en ce que** l'unité de commande (22) est adaptée, lorsque les premier et deuxième éléments de connexion (6a, 6b) sont connectés l'un à l'autre, pour commander un premier mode de restitution comportant l'affichage d'une représentation symbolique ou d'un élément abrégé indiquant la notification reçue.

3. Dispositif (1) à écran ployable selon la revendication 2, **caractérisé en ce que** l'unité de commande (22) est adaptée, lorsque les premier et deuxième éléments de connexion (6a, 6b) sont connectés l'un à l'autre, pour commander un premier mode de restitution comportant la production d'une alerte en forme de vibration ou de sonnerie pour signaler l'arrivée de la notification.

4. Dispositif (1) à écran ployable selon l'une quelconque des revendications 1 à 3, **caractérisé en ce que** l'unité de commande (22) est adaptée, lorsque les premier et deuxième éléments de connexion (6a, 6b) sont séparés l'un de l'autre, pour commander un deuxième mode de restitution comportant l'affichage, le long d'au moins une partie de l'écran (3), du contenu d'un message signalé par la notification reçue.

5. Dispositif (1) à écran ployable selon la revendication 4, **caractérisé en ce que** l'unité de commande (22) est adaptée pour commander un deuxième mode de restitution comportant l'affichage d'un jeu de raccourcis de réponse à la notification reçue.

6. Dispositif (1) à écran ployable selon la revendication 5, **caractérisé en ce qu'**il comporte une unité d'analyse (28) de la notification reçue, l'unité d'analyse (28) étant destinée à sélectionner, en fonction du résultat de l'analyse, le jeu de raccourcis de réponse à afficher.

7. Dispositif (1) à écran ployable selon la revendication 6, **caractérisé en ce que** l'unité d'analyse (22) de la notification reçue est adaptée pour repérer au moins un mot-clé dans un message signalé par la notification reçue et pour sélectionner, en cas de repérage d'un mot-clé déterminé, un jeu de raccourcis de réponse associé audit mot-clé.

8. Dispositif (1) à écran ployable selon l'une quelconque des revendications 1 à 7, **caractérisé en ce que** l'unité de commande (22) est adaptée pour détecter un changement de l'état de connexion des premier et deuxième éléments de connexion (6a,6b) après la restitution, selon l'un des premier et deuxième modes de restitution d'une notification reçue, et pour répondre à la détection de changement d'état de connexion en changeant le mode de restitution de la notification à l'autre des premier et deuxième modes de restitution.

9. Bracelet intelligent (1) comportant un dispositif à écran ployable selon l'une quelconque des revendications 1 à 8.

10. Procédé pour piloter un dispositif à écran ployable destiné à la restitution de notifications reçues, de manière sans fil, depuis un appareil externe, le dispositif à écran ployable comportant un premier et un deuxième élément de connexion destinés à se connecter l'un à l'autre pour maintenir en forme de boucle un substrat doté de l'écran ployable, le procédé comportant les étapes consistant à:
détecter l'état connecté ou déconnecté des premier et deuxième éléments de connexion,
recevoir une notification depuis l'appareil externe,
commander, en fonction de l'état détecté de connexion des premier et deuxième éléments de connexion (6a,6b), la restitution de la notification reçue, selon soit un premier mode de restitution soit un deuxième mode de restitution dans lequel la représentation affichée pour représenter la notification est différente de celle du premier mode de restitution.

## Patentansprüche

1. Vorrichtung (1) mit einem faltbaren Display zur Wiedergabe von Meldungen, umfassend:
ein Substrat mit einem länglichen, faltbaren Display (3),
ein erstes und ein zweites Verbindungselement (6a, 6b) zum Verbinden miteinander, um das Substrat in einer Schleifenform zu halten, wobei das Display (3) im Wesentlichen gebogen ist, wenn das Substrat in einer Schleifenform gehalten wird;
eine Empfangseinheit (21) zum drahtlosen Empfangen von Meldungen von einem externen Gerät, und
eine Steuereinheit (22), die dazu angepasst ist, die Wiedergabe von durch die Empfangseinheit (21) empfangenen Meldungen zu steuern, um den verbundenen oder getrennten Zustand des ersten und zweiten Verbindungselements (6a, 6b) zu erkennen,
wobei die Vorrichtung mit dem faltbaren Display **dadurch gekennzeichnet ist, dass** die Steuereinheit (22) auch dazu angepasst ist, die Wiedergabe einer empfangenen Meldung in Abhängigkeit von dem detektierten Verbindungszustand des ersten und zweiten Verbindungselements (6a, 6b) entweder gemäß einem ersten Wiedergabemodus oder einem zweiten Wiedergabemodus zu steuern, in dem die Darstellung, die angezeigt wird, um die Meldung darzustellen, sich von der des ersten Wiedergabemodus unterscheidet.

2. Vorrichtung (1) mit einem faltbaren Display nach Anspruch 1, **dadurch gekennzeichnet, dass** die Steuereinheit (22) dazu angepasst ist, wenn das erste und zweite Verbindungselement (6a, 6b) miteinander verbunden sind, einen ersten Wiedergabemodus zu steuern, der die Anzeige einer symbolischen Darstellung oder eines abgekürzten Elements umfasst, das die empfangene Meldung anzeigt.

3. Vorrichtung (1) mit einem faltbaren Display nach Anspruch 2, **dadurch gekennzeichnet, dass** die Steuereinheit (22) dazu angepasst ist, wenn das erste und das zweite Verbindungselement (6a, 6b) miteinander verbunden sind, einen ersten Wiedergabemodus zu steuern, der die Erzeugung eines Vibrations- oder Klingelalarms umfasst, um das Eingehen der Meldung zu signalisieren.

4. Vorrichtung (1) mit einem faltbaren Display nach einem der Ansprüche 1 bis 3, **dadurch gekennzeichnet, dass** die Steuereinheit (22) dazu angepasst ist, dass sie, wenn das erste und das zweite Verbindungselement (6a, 6b) voneinander getrennt sind, einen zweiten Wiedergabemodus steuert, der die Anzeige des Inhalts einer durch die empfangene Meldung signalisierten Nachricht entlang mindestens eines Teils des Displays (3) umfasst.

5. Vorrichtung (1) mit einem faltbaren Display nach Anspruch 4, **dadurch gekennzeichnet, dass** die Steuereinheit (22) dazu angepasst ist, einen zweiten Wiedergabemodus zu steuern, der die Anzeige eines Satzes von Kürzeln als Antwort auf die empfangene Meldung umfasst.

6. Vorrichtung (1) mit einem faltbaren Display nach Anspruch 5, **dadurch gekennzeichnet, dass** sie eine Einheit (28) zur Analyse der empfangenen Meldung umfasst, wobei die Einheit zur Analyse (28) dazu bestimmt ist, in Abhängigkeit vom Ergebnis der Analyse den anzuzeigenden Satz von Antwortkürzeln auszuwählen.

7. Vorrichtung (1) mit einem faltbaren Display nach Anspruch 6, **dadurch gekennzeichnet, dass** die Einheit zur Analyse (22) der empfangenen Meldung dazu angepasst ist, mindestens ein Schlüsselwort in einer durch die empfangene Meldung signalisierten Nachricht zu lokalisieren und im Falle des Auffindens eines bestimmten Schlüsselworts einen Satz von Antwortkürzeln auszuwählen, die dem Schlüsselwort zugeordnet sind.

8. Vorrichtung (1) mit einem faltbaren Display nach einem der Ansprüche 1 bis 7, **dadurch gekennzeichnet, dass** die Steuereinheit (22) dazu angepasst ist, eine Änderung des Verbindungszustands des ersten und des zweiten Verbindungselements (6a, 6b) nach der Wiedergabe gemäß einem der ersten und zweiten Wiedergabemodi einer empfangenen Meldung zu erkennen und auf die Erkennung der Änderung des Verbindungszustands zu antworten, indem der Wiedergabemodus der Meldung auf den anderen der ersten und zweiten Wiedergabemodi geändert wird.

9. Intelligentes Armband (1), das ein faltbares Display nach einem der Ansprüche 1 bis 8 umfasst.

10. Verfahren zum Ansteuern einer Vorrichtung mit faltbarem Display für die Wiedergabe von drahtlos von einem externen Gerät empfangenen Meldungen, wobei die Vorrichtung mit faltbarem Display ein erstes und zweites Verbindungselement zum Verbinden miteinander umfasst, um ein Substrat mit dem faltbaren Display in einer Schleifenform zu halten, wobei das Verfahren die folgenden Schritte umfasst:
Erkennen des verbundenen oder nicht verbundenen Zustands des ersten und zweiten Verbindungselements,
Empfangen einer Meldung vom externen Gerät,
abhängig vom erkannten Verbindungszustand des ersten und zweiten Verbindungselements (6a, 6b), Steuern der Wiedergabe der empfangenen Meldung gemäß entweder einem ersten Wiedergabemodus oder einem zweiten Wiedergabemodus, in dem die Darstellung, die angezeigt wird, um die Meldung darzustellen, sich von der des ersten Wiedergabemodus unterscheidet.

## Claims

1. Bendable-screen device (1) intended for rendering notifications, including:
a substrate provided with an elongate bendable screen (3),
a first and a second connection element (6a, 6b), which are intended to connect to one another in order to keep the substrate in the form of a loop, the screen (3) being substantially curved when the substrate is kept in the form of a loop,
a receiving unit (21), which is intended to wirelessly receive notifications from an external device, and
a control unit (22), which is designed to command the rendering of the notifications received by the receiving unit (21) and to detect the connected or separated state of the first and second connection elements (6a, 6b), said bendable-screen device being **characterized in that** the control unit (22) is also designed to command, on the basis of the detected state of connection of the first and second connection elements (6a, 6b), the rendering of a received notification according to either a first rendering mode or a second rendering mode in which the representation displayed to represent the notification is different from that of the first rendering mode.

2. Bendable-screen device (1) according to Claim 1, **characterized in that** the control unit (22) is designed, when the first and second connection elements (6a, 6b) are connected to one another, to command a first rendering mode that includes the display of a symbolic representation or an abridged element indicating the received notification.

3. Bendable-screen device (1) according to Claim 2, **characterized in that** the control unit (22) is designed, when the first and second connection elements (6a, 6b) are connected to one another, to command a first rendering mode that includes the production of an alert in the form of vibration or ringing to signal the arrival of the notification.

4. Bendable-screen device (1) according to any one of Claims 1 to 3, **characterized in that** the control unit (22) is designed, when the first and second connection elements (6a, 6b) are separated from one another, to command a second rendering mode that includes the display, along at least part of the screen (3), of the content of a message signalled by the received notification.

5. Bendable-screen device (1) according to Claim 4, **characterized in that** the control unit (22) is designed to command a second rendering mode that includes the display of a set of response shortcuts for responding to the received notification.

6. Bendable-screen device (1) according to Claim 5, **characterized in that** it includes an analysis unit (28) for analysing the received notification, the analysis unit (28) being intended to select, on the basis of the result of the analysis, the set of response shortcuts to be displayed.

7. Bendable-screen device (1) according to Claim 6, **characterized in that** the analysis unit (22) for analysing the received notification is designed to identify at least one keyword in a message signalled by the received notification and to select, if a determined keyword is identified, a set of response shortcuts associated with said keyword.

8. Bendable-screen device (1) according to any one of Claims 1 to 7, **characterized in that** the control unit (22) is designed to detect a change in the state of connection of the first and second connection elements (6a, 6b) after the rendering of a received notification according to either of the first and second rendering modes, and to respond to the detection of a change in the state of connection by changing the rendering mode of the notification to the other one of the first and second rendering modes.

9. Smart band (1) including a bendable-screen device according to any one of Claims 1 to 8.

10. Method for controlling a bendable-screen device intended for rendering notifications received wirelessly from an external device, the bendable-screen device including a first and a second connection element, which are intended to connect to one another in order to keep a substrate provided with the bendable screen in the form of a loop, the method including the steps of:
detecting the connected or disconnected state of the first and second connection elements,
receiving a notification from the external device,
commanding, on the basis of the detected state of connection of the first and second connection elements (6a, 6b), the rendering of the received notification according to either a first rendering mode or a second rendering mode in which the representation displayed to represent the notification is different from that of the first rendering mode.
